# EUROPEAN PATENT APPLICATION

(11) **EP 4 822 717 A1**
(43) Date of publication of application: **14.10.2026**
(21) Application number: 24900587.7
(22) Date of filing: 02.12.2024
(51) Int. Cl.: H01B 1/06, C03C 10/02, C03C 10/04, H01B 1/10, H01B 13/00, H01M 10/052, H01M 10/0562

(54) **SULFIDE SOLID ELECTROLYTE AND METHOD FOR MANUFACTURING SAME**

(30) Priority: 06.12.2023 JP 2023206288
(71) Applicant: AGC Inc., Chiyoda-ku Tokyo 100-8405 (JP)
(72) Inventor: FUJII, Naoki, Tokyo 100-8405 (JP); AKATSUKA, Kosho, Tokyo 100-8405 (JP)
(74) Representative: Müller-Boré & Partner Patentanwälte PartG mbB
(86) International application number: PCT/JP2024/042581
(87) International publication number: WO 2025/121293

(57) **Abstract**

The present invention pertains to a sulfide solid electrolyte which comprises a crystal phase including a crystal represented by composition formula RₐP_{b}M_{c}M'_{c'}S_{d}Xₑ (3<a<7, 0<b, 0<c, 0≤c', b+c+c'=1, 3<d<6, 0.1<{(c+c')/(b+c+c')}<1.0, 1.1≤{e/(b+c+c')}≤2.0) (R represents an alkali metal element, P represents a phosphorus element, M and M' each represent an element belonging to groups 2-15 of the periodic table and capable of forming a tetrahedral coordination structure together with S, S represents a sulfur element, and X represents a halogen element), and in which, in the composition formula, the atomic number of M is higher than that of P, the atomic number of M' is lower than that of P, and the crystal has a PS₄ tetrahedral structure and an MS₄ tetrahedral structure.

## Description

### TECHNICAL FIELD

The present invention relates to a sulfide solid electrolyte and a method for producing the sulfide solid electrolyte.

### BACKGROUND ART

Lithium ion secondary batteries are widely used in portable electronic devices such as a mobile phone and a notebook computer.

In the related art, a liquid electrolyte has been used in a lithium ion secondary battery. On the other hand, an all-solid-state lithium ion secondary battery in which a solid electrolyte is used as an electrolyte of the lithium ion secondary battery has attracted attention from the viewpoint that improvement in safety, high-speed charging and discharging, and a reduction in size of a case can be expected.

Among the solid electrolytes used in the all-solid-state lithium ion secondary battery, the sulfide solid electrolyte exhibits a high lithium ion conductivity. Among them, an argyrodite solid electrolyte exhibits a higher lithium ion conductivity.

For example, Patent Literature 1 discloses an argyrodite sulfide solid electrolyte that contains a compound represented by a compositional formula: Li₇₋ₓPS_{6-X}Ha_{X} (where Ha represents Cl or Br) (where x = 0.2 to 1.8), and a lightness L value of an L* a* b* color system is 60.0 or more.

However, an argyrodite sulfide solid electrolyte known in the related art easily reacts with moisture and readily generates hydrogen sulfide (H₂S) , and when the argyrodite-type sulfide solid electrolyte is exposed to an atmosphere containing moisture, the lithium ion conductivity significantly decreases.

In contrast, Non-Patent Literature 1 discloses argyrodite-type Li_{6.6}[Si_{0.6}Sb_{0.4}]S₅I in which a SiS₄ tetrahedral structure and a SbS₄ tetrahedral structure are adopted instead of a PS₄ tetrahedral structure. Accordingly, the amount of H₂S generated is reduced, and a decrease in lithium ion conductivity when exposed to an atmosphere containing moisture is prevented.

### CITATION LIST

### PATENT LITERATURE

Patent Literature 1: WO2015/012042

### NON-PATENT LITERATURE

Non-Patent Literature 1: Laidong Zhou et al., "New Family of Argyrodite Thioantimonate Lithium Superionic Conductors", J.Am. Chem. Soc. 2019, 141, 48, 19002-19013

### SUMMARY OF INVENTION

### TECHNICAL PROBLEM

However, in the sulfide solid electrolyte described in Non-Patent Literature 1, the degree of reduction in the amount of H₂S generated and the degree of prevention of a decrease in the lithium ion conductivity when exposed to an atmosphere containing moisture are insufficient. Further, it was found that there is a problem in reduction resistance when a sulfide solid electrolyte employing a SiS₄ tetrahedral structure and a SbS₄ tetrahedral structure instead of a PS₄ tetrahedral structure is mounted on a lithium ion battery.

Therefore, an object of the present invention is to provide a sulfide solid electrolyte that generates a small amount of H₂S, prevents a decrease in ion conductivity when exposed to an atmosphere containing moisture, and has good reduction resistance, and a method for producing the sulfide solid electrolyte.

### SOLUTION TO PROBLEM

When an MS₄ tetrahedral structure having a four-coordinate structure formed by M as a specific element and S is contained in the crystal, the amount of H₂S generated can be reduced, and a decrease in ionic conductivity when exposed to an atmosphere containing moisture can be prevented. As a result of further studies by the present inventors, it was found that good reduction resistance can also be achieved by allowing a PS₄ tetrahedral structure to coexist in addition to the above MS₄ tetrahedral structure in the crystal. Further, the present inventors have found that, in a composition of a crystal, by setting a content of a halogen element to a certain amount or more, a proportion of isolated sulfur present as S²⁻ in the crystal can be reduced, and as a result, the amount of H₂S generated can be further reduced, and have completed the present invention.

That is, the present invention relates to the following [1] to [21].
[1] A sulfide solid electrolyte including a crystal phase,
   in which the crystal phase includes a crystal represented by a compositional formula: RₐP_{b}M_{c}M'_{c'}S_{d}Xₑ,
   in the compositional formula, R represents an alkali metal element, P represents a phosphorus element, M is an element belonging to Groups 2 to 15 of the periodic table and represents an element having an atomic number larger than that of P and capable of forming a four-coordinate structure with S, M' is an element belonging to Groups 2 to 15 of the periodic table and represents an element having an atomic number smaller than that of P and capable of forming a four-coordinate structure with S, S represents a sulfur element, and X represents a halogen element,
   in the compositional formula, 3 < a < 7, 0 < b, 0 < c, 0 ≤ c', b + c + c' = 1, 3 < d < 6, 0.1 < {(c + c')/(b + c + c')} < 1.0, and 1.1 ≤ {e/(b + c + c')} ≤ 2.0 are satisfied, and
   the crystal includes a PS₄ tetrahedral structure and an MS₄ tetrahedral structure.
[2] The sulfide solid electrolyte according to [1],
   in which in the compositional formula, 4 < a < 7 is satisfied.
[3] The sulfide solid electrolyte according to [1] or [2],
   in which in the compositional formula, 0.2 < {(c + c')/(b + c + c')} < 1.0 is satisfied.
[4] The sulfide solid electrolyte according to any one of [1] to [3],
   in which in the compositional formula, 4 < d < 6 is satisfied.
[5] The sulfide solid electrolyte according to any one of [1] to [4],
   in which in the compositional formula, 1.2 ≤ {e/(b + c + c')} ≤ 1.9 is satisfied.
[6] The sulfide solid electrolyte according to any one of [1] to [5],
   including, as M in the compositional formula, at least one selected from the group consisting of Mn, Ni, As, Mo, Co, Ag, Cd, Ir, W, Sn, Sb, Ga, Ge, In, Pb, Bi, Cu, Ti, V, Cr, Fe, Zn, Y, Zr, Nb, Ta, W, and La.
[7] The sulfide solid electrolyte according to any one of [1] to [6],
   including, as M in the compositional formula, at least one of Sn and Sb .
[8] The sulfide solid electrolyte according to any one of [1] to [7],
   including, as M' in the compositional formula, at least one selected from the group consisting of Mg, N, Si, Al, and B.
[9] The sulfide solid electrolyte according to any one of [1] to [8],
   in which the crystal has a crystal structure of an F-43m space group.
[10] The sulfide solid electrolyte according to any one of [1] to [9],
   including I as X in the compositional formula.
[11] The sulfide solid electrolyte according to [10], further including Br as X in the compositional formula.
[12] The sulfide solid electrolyte according to any one of [1] to [11],
   in which M and M' in the compositional formula include a total of two or more elements.
[13] The sulfide solid electrolyte according to [12],
   in which M and M' in the compositional formula include a total of eight or less elements.
[14] The sulfide solid electrolyte according to any one of [1] to [13],
   including, as R in the compositional formula, at least one selected from the group consisting of Li, Na, and K.
[15] The sulfide solid electrolyte according to any one of [1] to [14], including Li as R in the compositional formula.
[16] The sulfide solid electrolyte according to any one of [1] to [15],
   in which the crystal includes an argyrodite crystal structure.
[17] A method for producing the sulfide solid electrolyte according to any one of [1] to [16], the method including, in order:
   mixing raw materials containing elements R, P, M, S, and X to obtain a raw material mixture;
   performing a heat treatment to obtain a melt of the raw material mixture; and
   cooling the melt to precipitate a crystal,
   in which among the elements, R represents an alkali metal element, P represents a phosphorus element, M is an element belonging to Groups 2 to 15 of the periodic table and represents an element having an atomic number larger than that of P and capable of forming a four-coordinate structure with S, S represents a sulfur element, and X represents a halogen element.
[18] The method for producing the sulfide solid electrolyte according to [17],
   in which the cooling is performed by slow cooling at a cooling rate of 0.01°C/sec to 2,000°C/sec.
[19] The method for producing the sulfide solid electrolyte according to [17] or [18],
   in which the raw material mixture further includes a raw material containing an element M', and
   M' is an element belonging to Groups 2 to 15 of the periodic table and is an element having an atomic number smaller than the atomic number of P and capable of forming a four-coordinate structure with S.
[20] The method for producing the sulfide solid electrolyte according to any one of [17] to [19], further including performing a post-heat treatment by heating after the crystal is precipitated.
[21] The method for producing a sulfide solid electrolyte according to [20],
   in which the post-heat treatment is performed under a condition of a temperature of 300°C to 600°C, a time of 10 minutes to 20 hours, an inert atmosphere, and a dew point of - 20°C or lower.

### ADVANTAGEOUS EFFECTS OF INVENTION

According to the present invention, it is possible to obtain a sulfide solid electrolyte that generates a small amount of H₂S, prevents a decrease in ion conductivity when exposed to an atmosphere containing moisture, and has good reduction resistance. Therefore, the secondary battery on which the above sulfide solid electrolyte is mounted has excellent battery characteristics.

### BRIEF DESCRIPTION OF DRAWINGS

[FIG. 1] FIG. 1 is a flow diagram showing an aspect of a method for producing the sulfide solid electrolyte according to the present embodiment.
[FIG. 2] FIG. 2 is a flow diagram showing an aspect of a method for producing the sulfide solid electrolyte according to the present embodiment.
[FIG. 3] FIG. 3 is an XRD pattern of a sulfide solid electrolyte in Example 1.
[FIG. 4] FIG. 4 is an XRD pattern of a sulfide solid electrolyte in Example 3.
[FIG. 5] FIG. 5 is an XRD pattern of a sulfide solid electrolyte in Example 5.
[FIG. 6] FIG. 6 is an XRD pattern of a sulfide solid electrolyte in Example 7.
[FIG. 7] FIG. 7 is an XRD pattern of a sulfide solid electrolyte in Example 9.
[FIG. 8] FIG. 8 is an XRD pattern of a sulfide solid electrolyte in Example 11.

### DESCRIPTION OF EMBODIMENTS

Hereinafter, the present invention is described in detail, but the present invention is not limited to the following embodiment, and can be freely modified and implemented without departing from the gist of the present invention.

"To" indicating a numerical range is used to include numerical values written before and after it as a lower limit value and an upper limit value.

In the present description, "mass%" is synonymous with "weight%".

### <<Sulfide Solid Electrolyte>>

The sulfide solid electrolyte according to the present embodiment has a crystal phase.

The above crystal phase includes a crystal represented by a compositional formula: RₐP_{b}M_{c}M'_{c'}S_{d}Xₑ. In the compositional formula, R represents an alkali metal element, P represents a phosphorus element, M is an element belonging to Groups 2 to 15 of the periodic table and represents an element having an atomic number larger than that of P and capable of forming a four-coordinate structure with S, M' is an element belonging to Groups 2 to 15 of the periodic table and represents an element having an atomic number smaller than that of P and capable of forming a four-coordinate structure with S, S represents a sulfur element, and X represents a halogen element. In the above compositional formula, a to e and c', which mean content ratios (compositional ratios) in molar ratio of each element, satisfy the following relationship. Here, when two or more elements are contained as the elements represented by R, M, M', and X, respectively, a, c, c', and e representing the compositional ratios of R, M, M', and X respectively mean the total of the two or more elements.
3 < a < 7, 0 < b, 0 < c, 0 ≤ c', b + c + c' = 1, 3 < d < 6, 0.1 < {(c + c')/(b + c + c')} < 1.0, and 1.1 ≤ {e/(b + c + c')} ≤ 2.0

In addition to the above, the crystal in the present embodiment has a PS₄ tetrahedral structure and an MS₄ tetrahedral structure.

### <Crystal Phase>

The compositional formula of the crystal contained in the crystal phase in the present embodiment is represented by RₐP_{b}M_{c}M'_{c'}S_{d}Xₑ.

As described above, R in the above compositional formula represents an alkali metal element. Specifically, R preferably includes at least one selected from the group consisting of Li, Na, and K, more preferably includes at least one of Li and Na, and still more preferably includes Li.

Here, the alkali metal element means a carrier of the solid electrolyte. That is, in the case where the sulfide solid electrolyte according to the present embodiment is used in a lithium ion battery, R preferably includes Li. In the case where the sulfide solid electrolyte according to the present embodiment is used in a sodium ion battery, R preferably includes Na. Further, in the case where the sulfide solid electrolyte according to the present embodiment is used in a potassium ion battery, R preferably includes K.

In the compositional formula: RₐP_{b}M_{c}M'_{c'}S_{d}Xₑ representing the crystal in the present embodiment, based on (b + c + c') which is the total compositional ratio of P, M, and M', that is, when b + c + c' = 1, the compositional ratio a of R representing the alkali metal element is more than 3 and less than 7, preferably more than 4 and less than 7, more preferably more than 5 and less than 7, still more preferably more than 5.2 and less than 6.8, and yet still more preferably more than 5.4 and less than 6.5.

Here, the compositional ratio a is more than 3, preferably more than 4, more preferably more than 5, still more preferably more than 5.2, and yet still more preferably more than 5.4 from the viewpoint of precipitating the target crystal phase. The compositional ratio a is less than 7, preferably less than 6.8, and more preferably less than 6.5 from the viewpoint of improving the ionic conductivity and reducing the amount of hydrogen sulfide (H₂S) generated.

P (phosphorus element), M, and M' in the compositional formula are elements capable of forming a four-coordinate structure with S (sulfur element). That is, the crystal in the present embodiment has a PS₄ tetrahedral structure and an MS₄ tetrahedral structure, and optionally further has an M'S₄ tetrahedral structure. Here, M is an element belonging to Groups 2 to 15 of the periodic table and represents an element having an atomic number larger than that of P and capable of forming a four-coordinate structure with S. M' is an element belonging to Groups 2 to 15 of the periodic table and represents an element having an atomic number smaller than that of P and capable of forming a four-coordinate structure with S.

When the crystal in the present embodiment has the MS₄ tetrahedral structure in which M is coordinated with S, the amount of H₂S generated can be reduced, and a decrease in ion conductivity when exposed to an atmosphere containing moisture can be prevented. In addition to the MS₄ tetrahedral structure, the M'S₄ tetrahedral structure may be further included, thereby suitably obtaining the above effect.

The present inventors believe that this is because MS₄ tetrahedrons are less likely to be bonded to H₂O than PS₄ tetrahedrons.

The above can be explained based on the HSAB (Hard and Soft Acids and Bases) principle. The HSAB principle introduces the concepts of hardness and softness with respect to the reactivity of acids and bases. Similarly, in the tetrahedral structure, it is considered that, with respect to H₂O composed of a hard base such as OH⁻, a tetrahedral structure having a weak acid as a central element is less likely to react.

Here, while P⁵⁺ constituting the PS₄ tetrahedron is classified as a hard acid, elements that can be said to form acids weaker than P⁵⁺ are elements belonging to Groups 2 to 15 of the periodic table and having an atomic number larger than that of P.

M is not limited as long as M is an element belonging to Groups 2 to 15 of the periodic table, having an atomic number larger than that of P, and capable of forming a four-coordinate structure with S, and examples thereof include Mn, Ni, As, Mo, Co, Ag, Cd, Ir, W, Sn, Sb, Ga, Ge, In, Pb, Bi, Cu, Ti, V, Cr, Fe, Zn, Y, Zr, Nb, Ta, W, and La. That is, M preferably includes at least one selected from the group consisting of Mn, Ni, As, Mo, Co, Ag, Cd, Ir, W, Sn, Sb, Ga, Ge, In, Pb, Bi, Cu, Ti, V, Cr, Fe, Zn, Y, Zr, Nb, Ta, W, and La. Among them, Sn, Sb, Bi, Ti, V, Cr, Fe, Zn, Y, Zr, Nb, Ta, W, and La are more preferred, Sn, Sb, Bi, Ti, Cr, Fe, Zn, Y, Zr, and Nb are still more preferred, Sn, Sb, Bi, Y, Zr, and Nb are yet still more preferred, and at least one of Sn and Sb is particularly preferred, from the viewpoint that hydrogen sulfide (H₂S) is less likely to be generated and lithium ion conductivity is less likely to decrease even when exposed to an atmosphere containing moisture.

The crystal in the present embodiment can also be achieved to contain two or more elements as M by adopting a production method described below. Accordingly, a crystal having a plurality of MS₄ tetrahedral structures can be obtained depending on desired characteristics.

Here, in the case where two or more elements are contained as M, M preferably includes at least one of Sn and Sb, and more preferably includes Sn and Sb.

The number of types of M elements is preferably 1 to 8, more preferably 2 to 5, and still more preferably 2 to 4. Here, the number of the types of the M elements constituting the crystal in the present embodiment is preferably one or more, and in the case where M' is not contained, two or more types are preferred. The upper limit of the number of types of M elements is not particularly limited, and is preferably 8 or less, more preferably 5 or less, and still more preferably 4 or less from the viewpoint of suitably obtaining the effect of having a PS₄ tetrahedral structure in the crystal.

M and M' in the compositional formula representing the crystal in the present embodiment preferably contain a total of 2 to 8 elements, more preferably 2 to 5 elements, and still more preferably 2 to 4 elements. That is, the number of types of the above elements is preferably 2 or more, and is preferably 8 or less, more preferably 5 or less, and still more preferably 4 or less.

In the case where Sb is contained as M, the proportion of Sb to the total compositional ratio c of M is preferably 15% to 100%, more preferably 30% to 90%, and still more preferably 40% to 80% in atomic ratio. Here, the above proportion of Sb is preferably 15% or more, more preferably 30% or more, and still more preferably 40% or more, from the viewpoint of improving the water resistance and improving ion conductivity. The above proportion of Sb may be 100%, that is, only Sb may be contained as M. On the other hand, the above proportion of Sb is preferably 90% or less, and more preferably 80% or less, from the viewpoint of improving the ionic conductivity by further mixing different types of elements.

In the case where Sn is contained as M, the proportion of Sn to the total compositional ratio c of M is preferably 5% to 80%, more preferably 10% to 50%, and still more preferably 20% to 40% in atomic ratio. Here, the above proportion of Sn is preferably 5% or more, more preferably 10% or more, and still more preferably 20% or more, from the viewpoint of improving the water resistance. The above proportion of Sn may be 100%, and the above proportion of Sn is preferably 80% or less, more preferably 50% or less, and still more preferably 40% or less, from the viewpoint of increasing the ionic conductivity.

The crystal in the present embodiment may contain M' as a constituent element in addition to R, P, M, S, and X.

M' is an element belonging to Groups 2 to 15 of the periodic table, and is an element having an atomic number smaller than that of P and capable of forming a four-coordinate structure with S. Examples of M' include Mg (magnesium), N (nitrogen), Si (silicon), Al (aluminum), and B (boron). That is, M' preferably includes at least one selected from the group consisting of Mg, N, Si, Al, and B.

That is, the crystal in the present embodiment may further have an M'S₄ tetrahedral structure as a tetrahedral structure other than the MS₄ tetrahedral structure. This is preferred in terms of ion conductivity.

The M'S₄ tetrahedral structure may be, for example, at least one selected from the group consisting of a MgS₄ tetrahedral structure, a NS₄ tetrahedral structure, a SiS₄ tetrahedral structure, an AlS₄ tetrahedral structure, and a BS₄ tetrahedral structure, or may be at least one selected from the group consisting of a SiS₄ tetrahedral structure, an AlS₄ tetrahedral structure, and a BS₄ tetrahedral structure. Among them, the SiS₄ tetrahedral structure is preferably contained, from the viewpoint of ion conductivity.

The crystal in the present embodiment has a PS₄ tetrahedral structure in addition to the MS₄ tetrahedral structure and the optional M'S₄ tetrahedral structure. Accordingly, good reduction resistance can be achieved as compared with the case of the MS₄ tetrahedral structure, or only the MS₄ tetrahedral structure and the M'S₄ tetrahedral structure.

The proportion of each of the PS₄ tetrahedral structure, the MS₄ tetrahedral structure, and the M'S₄ tetrahedral structure is represented by a compositional ratio b of P which is a phosphorus element, a compositional ratio c of M, and a compositional ratio c' of M' in the compositional formula.

Here, a ratio represented by {(c + c')/(b + c + c')} is more than 0.1 and less than 1.0, preferably more than 0.2 and less than 1.0, also preferably 0.2 to 0.9, more preferably 0.3 to 0.85, and still more preferably 0.4 to 0.7. Here, the above ratio is more than 0.1, preferably 0.2 or more, more preferably more than 0.2, still more preferably 0.3 or more, and yet still more preferably 0.4 or more, from the viewpoint of water resistance. The above ratio is less than 1.0, preferably 0.9 or less, more preferably 0.85 or less, and still more preferably 0.7 or less, from the viewpoint of reduction resistance. The tetrahedral structure can be confirmed by structural analysis of an XRD pattern, solid NMR measurement, or the like, and the compositional ratio of each element can be confirmed by composition analysis or the like.

Note that b, c, and c' which are the respective compositional ratios of P, M, and M' have the following relationships.
0 < b, 0 < c, 0 ≤ c', and b + c + c' = 1

The compositional ratio d of S, which is a sulfur element, is more than 3 and less than 6, preferably more than 4 and less than 6, more preferably more than 4 and less than 5.3, and still more preferably more than 4.1 and less than 5.2. Here, the above S forms a PS₄ tetrahedral structure, an MS₄ tetrahedral structure, or an optional M'S₄ tetrahedral structure in the crystal in the present embodiment, and may also exist as isolated sulfur S²⁻.

The compositional ratio d is more than 3, preferably more than 4, and more preferably more than 4.1, from the viewpoint of forming a PS₄ tetrahedral structure, an MS₄ tetrahedral structure, or an M'S₄ tetrahedral structure without excess or deficiency. The compositional ratio d is less than 6, preferably less than 5.3, and more preferably less than 5.2, from the viewpoint of reducing the proportion of the isolated sulfur and achieving good water resistance.

The crystal in the present embodiment contains a halogen element represented by X as a constituent element. Examples of the halogen element include fluorine (F), chlorine (Cl), bromine (Br), and iodine (I). Among them, from the viewpoint of improving the ionic conductivity, at least one selected from the group consisting of chlorine, bromine, and iodine is preferably contained, at least one of bromine and iodine is more preferably contained, and iodine is still more preferably contained.

It is also preferable to contain two or more types of halogen elements from the viewpoint of improving the ionic conductivity. In this case, at least two selected from the group consisting of chlorine, bromine, and iodine are preferably contained, and bromine and iodine are more preferably contained.

The ratio of the compositional ratio e of X which is a halogen element contained in the crystal in the present embodiment to (b + c + c') which is a total compositional ratio of P, M, and M', that is, a ratio represented by {e/(b + c + c')} is 1.1 or more and 2.0 or less, preferably 1.2 or more and 1.9 or less, more preferably 1.3 or more and 1.8 or less, and still more preferably 1.4 or more and 1.7 or less. Here, when the halogen element enters the site of S²⁻, which is isolated sulfur, the proportion of isolated sulfur can be reduced. The above ratio is 1.1 or more, preferably 1.2 or more, more preferably 1.3 or more, and still more preferably 1.4 or more, from this viewpoint. The above ratio is 2.0 or less, preferably 1.9 or less, more preferably 1.8 or less, and still more preferably 1.7 or less, from the viewpoint of obtaining the target crystal phase.

The crystal in the present embodiment may further contain elements other than R, P, M, optional M', S, and X as constituent elements.

Examples of other elements include N, C, and O. These elements may be present in the crystal in the form of CN, COₙ, NOₙ, SOₙ, or the like.

In the crystal of the present embodiment, the compositional ratio of each element in the compositional formula: RₐP_{b}M_{c}M'_{c'}S_{d}Xₑ satisfies 3 < a < 7, 0 < b, 0 < c, 0 ≤ c', b + c + c' = 1, 3 < d < 6, 0.1 < {(c + c')/(b + c + c')} < 1.0, and 1.1 ≤ {e/(b + c + c')} ≤ 2.0, preferably satisfies 4 < a < 7, 0 < b, 0 < c, 0 ≤ c', b + c + c' = 1, 4 < d < 6, 0.2 < {(c + c')/(b + c + c')} < 1.0, and 1.2 ≤ {e/(b + c + c')} ≤ 1.9, or 5 < a < 7, 0 < b, 0 < c, 0 ≤ c', b + c + c' = 1, 4 < d < 5.3, 0.2 ≤ {(c + c')/(b + c + c')} ≤ 0.9, and 1.2 ≤ {e/(b + c + c')} ≤ 1.9, more preferably satisfies 5.2 < a < 6.8, 0 < b, 0 < c, 0 ≤ c', b + c + c' = 1, 4.1 < d < 5.2, 0.3 ≤ {(c + c')/(b + c + c')} ≤ 0.85, and 1.3 ≤ {e/(b + c + c')} ≤ 1.8, and still more preferably satisfies 5.4 < a < 6.5, 0 < b, 0 < c, 0 ≤ c', b + c + c' = 1, 4.1 < d < 5.2, 0.4 ≤ {(c + c')/(b + c + c')} ≤ 0.7, and 1.4 ≤ {e/(b + c + c')} ≤1.7.

The crystal in the present embodiment preferably has a crystal structure of the F-43m space group, and more preferably has a cubic crystal structure of the F-43m space group, from the viewpoint of improving the ion conductivity. The crystal in the present embodiment more preferably has an argyrodite crystal structure, and still more preferably has a cubic argyrodite crystal structure. The argyrodite in the present description refers to a crystal structure of a group of compounds derived from a mineral represented by a compositional formula Ag₈GeS₆.

When the crystal in the present embodiment is a cubic crystal of the above F-43m space group, the lattice constant is preferably 10.25 Å to 10.45 Å, and more preferably 10.30 Å to 10.42 Å. That is, the lattice constant is preferably 10.25 Å or more, more preferably 10.30 Å or more, and is preferably 10.45 Å or less, more preferably 10.42 Å or less.

The lattice constant of the crystal is determined from Rietveld analysis of an XRD pattern or a representative peak position. When the lattice constant of the crystal is determined at a representative peak position, it is desirable to obtain an average value using two or more peaks.

The sulfide solid electrolyte according to the present embodiment may be composed only of a crystal phase composed of the above crystals, or may include other crystal phases or amorphous phases.

The content of the above crystal in the sulfide solid electrolyte according to the present embodiment is preferably 50 mass% to 100 mass%, more preferably 60 mass% to 100 mass%, and still more preferably 70 mass% to 90 mass%. Here, the above content is preferably 50 mass% or more, more preferably 60 mass% or more, and still more preferably 70 mass% or more, from the viewpoint of improving the ion conductivity. The content of the above crystal may be 100 mass%, that is, the sulfide solid electrolyte according to the present embodiment may be composed only of the crystal. On the other hand, from the viewpoint of moldability, the above content proportion is preferably less than 100 mass% and more preferably 90 mass% or less.

When the crystal in the present embodiment has the crystal structure of the F-43m space group, the content of the crystal in the sulfide solid electrolyte is the same as described above. That is, the content of the crystal is preferably 50 mass% or more, more preferably 60 mass% or more, still more preferably 70 mass% or more, and may be 100 mass%, less than 100 mass%, or 90 mass% or less.

### <Sulfide Solid Electrolyte>

The secondary particle diameter of the sulfide solid electrolyte according to the present embodiment is preferably small from the viewpoint of obtaining good ion conductivity when used in a secondary battery. The above secondary particle diameter is preferably 10 µm or less, more preferably 3 µm or less, and still more preferably 1 µm or less. The lower limit of the secondary particle diameter is not particularly limited, and the secondary particle diameter is generally 0.1 µm or more.

The secondary particle diameter can be measured using a Microtrac device.

The lithium ion conductivity of the sulfide solid electrolyte according to the present embodiment at 25°C is preferably 0.1 × 10⁻³ S/cm or more, more preferably 1 × 10⁻³ S/cm or more, and still more preferably 2 × 10⁻³ S/cm or more. A higher lithium ion conductivity is more preferable. The upper limit of the lithium ion conductivity is not particularly limited, and is generally 1 × 10⁻¹ S/cm or less.

The lithium ion conductivity can be measured by an AC impedance method. Specifically, the lithium ion conductivity is a value measured by electrochemical impedance spectroscopy (for example, potentiostat/galvanostat VSP, manufactured by Bio-Logic Sciences Instruments) under the following conditions: measurement frequency: 100 Hz to 1 MHz, measurement voltage: 100 mV, measurement temperature: 25°C.

The sulfide solid electrolyte according to the present embodiment can be identified by analyzing the crystal structure by X-ray diffraction (XRD) measurement, and analyzing the elemental composition using various methods such as ICP emission spectrometry, atomic absorption spectrometry, and ion chromatography. For example, P, M, M', and S can be measured by ICP emission spectrometry, R can be measured by atomic absorption spectrometry, and X can be measured by ion chromatography.

The sulfide solid electrolyte according to the present embodiment is suitably used for an electrode mixture or a solid electrolyte layer used in a secondary battery, is particularly suitable for an all-solid-state secondary battery, and is more suitable for an all-solid-state lithium ion secondary battery.

That is, the above electrode mixture is used in a secondary battery, and contains the above sulfide solid electrolyte and an active material.

The above solid electrolyte layer is used in a secondary battery and contains the above sulfide solid electrolyte.

The above electrode mixture, solid electrolyte layer, and all-solid-state lithium ion secondary battery may further contain another solid electrolyte. The other solid electrolyte is not particularly limited, and examples thereof include a solid electrolyte having a well-known argyrodite crystal structure, a solid electrolyte having a Li₃PS₄ or LGPS crystal structure, and a Li-P-S-Ha (Ha is a halogen element)-based crystallized glass type solid electrolyte.

As the active material contained in the electrode mixture, a well-known active material can be used.

For example, a positive electrode active material is not particularly limited as long as it can reversibly occlude and release alkali metal ions, desorb and insert (intercalate) the alkali metal ions, or dope and dedope counter anions of the alkali metal ions. Here, the above alkali metal ions are preferably lithium ions.

Specific examples of the above positive electrode active material include lithium cobalt oxide, lithium nickel oxide, lithium manganese oxide, lithium nickel manganese oxide, a composite metal oxide, and a polyanion olivine positive electrode.

The negative electrode active material is also not particularly limited as long as it can reversibly occlude and release alkali metal ions, desorb and insert (intercalate) the alkali metal ions, or dope and dedope counter anions of the alkali metal ions. Here, the above alkali metal ions are preferably lithium ions.

Specific examples of the above negative electrode active material include metal lithium, carbon-based materials such as graphite, hard carbon, and soft carbon, metals capable of forming an alloy with lithium, such as aluminum, silicon, and tin, amorphous oxides such as silicon oxide and tin oxide, and lithium titanate.

The solid electrolyte layer contains the sulfide solid electrolyte according to the present embodiment, and may further contain an additive such as a binder.

As the binder, well-known materials can be used, and examples thereof include butadiene rubber, acrylate butadiene rubber, styrene butadiene rubber, polyvinylidene fluoride, and polytetrafluoroethylene. The content of the binder in the solid electrolyte layer may also be within a well-known range.

The all-solid-state secondary battery is not particularly limited as long as it contains the sulfide solid electrolyte according to the present embodiment, a positive electrode, and a negative electrode. The positive electrode or the negative electrode may be an electrode mixture containing the sulfide solid electrolyte according to the present embodiment.

The active material of the positive electrode may be the same as the positive electrode active material described in the electrode mixture, and the positive electrode may further include a positive electrode current collector, a binder, a conductive auxiliary agent, and the like as necessary. As the positive electrode current collector, a metal thin plate such as aluminum, an alloy thereof, and stainless steel, or the like can be used.

The active material of the negative electrode may be the same as the negative electrode active material described in the electrode mixture, and the negative electrode may further include a negative electrode current collector, a binder, a conductive auxiliary agent, and the like as necessary. As the negative electrode current collector, a metal thin plate such as copper or aluminum can be used.

### <<Method for Producing Sulfide Solid Electrolyte>>

The method for producing a sulfide solid electrolyte according to the present embodiment is not particularly limited as long as the sulfide solid electrolyte described in the above <<Sulfide Solid Electrolyte>> is obtained. Preferred aspects of the obtained sulfide solid electrolyte are also the same as the preferred aspects described in the above <<Sulfide Solid Electrolyte>>.

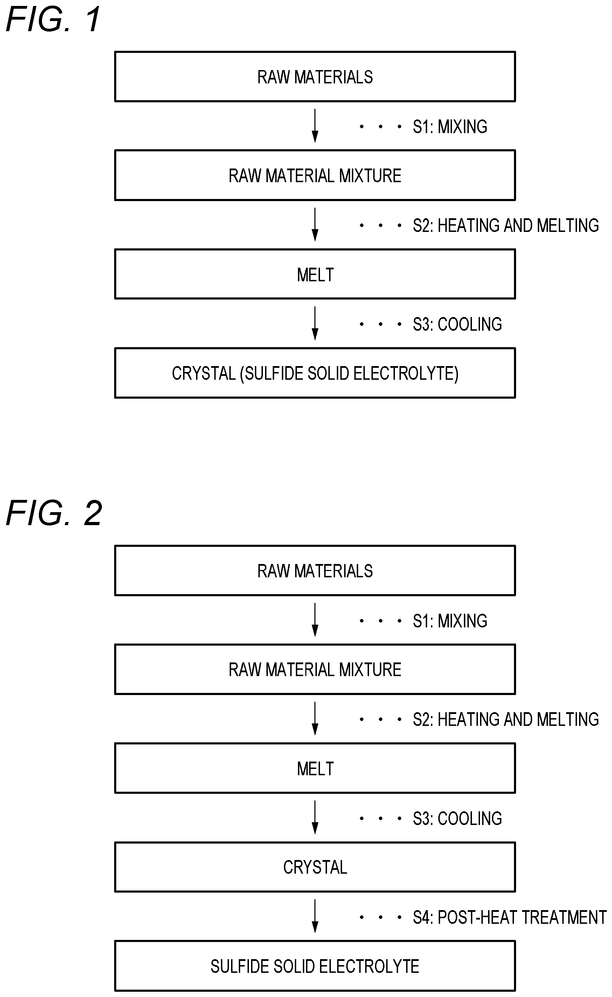

As shown in FIG. 1, an example of the method for producing the sulfide solid electrolyte according to the present embodiment includes the following steps in order.
Step S1: a step of mixing raw materials containing elements R, P, M, S, and X to obtain a raw material mixture
Step S2: a step of performing a heat treatment to obtain a melt of the raw material mixture obtained in step S1
Step S3: a step of cooling the melt obtained in step S2 to precipitate a crystal

The raw material mixture in the above step S1 may further contain a raw material containing the element M'.

Among the elements in the above step S1, R represents an alkali metal element, P represents a phosphorus element, M is an element belonging to Groups 2 to 15 of the periodic table and represents an element having an atomic number larger than that of P and capable of forming a four-coordinate structure with S, M' is an element belonging to Groups 2 to 15 of the periodic table and represents an element having an atomic number smaller than that of P and capable of forming a four-coordinate structure with S, S represents a sulfur element, and X represents a halogen element.

As shown in FIG. 2, the production method according to the present embodiment may further include the following step S4 after step S3.
Step S4: a step of further performing a post-heat treatment by heating after the crystal is precipitated in step S3

The steps are described in order.

### <Step S1: mixing>

Step S1 in the present embodiment is a step of mixing raw materials containing elements R, P, M, optional M', S, and X to obtain a raw material mixture.

Among the elements in the above step, R represents an alkali metal element, P represents a phosphorus element, M is an element belonging to Groups 2 to 15 of the periodic table and represents an element having an atomic number larger than that of P and capable of forming a four-coordinate structure with S, M' is an element belonging to Groups 2 to 15 of the periodic table and represents an element having an atomic number smaller than that of P and capable of forming a four-coordinate structure with S, S represents a sulfur element, and X represents a halogen element.

Examples of the alkali metal element (R) include substances such as a lithium element (Li), a sodium element (Na), and a potassium element (K). In the case where the obtained sulfide solid electrolyte is applied to a lithium ion secondary battery, the present raw material preferably includes a substance such as a lithium element (Li) as the alkali metal element (R).

As an alkali metal element (R)-containing raw material, substances containing an alkali metal element, such as an elemental alkali metal element and compounds containing an alkali metal element, can be appropriately combined and used. In the case where the alkali metal element (R) is a lithium element (Li), a Li-containing substance such as elemental Li or a Li-containing compound can be appropriately used in combination as the lithium element.

Examples of a lithium element (Li)-containing raw material include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metal lithium. The lithium element (Li)-containing raw material may be used alone or in combination of two or more types thereof.

As the lithium element (Li)-containing raw material, it is preferable to use lithium sulfide from the viewpoint of obtaining a sulfide material. In the case where the obtained sulfide solid electrolyte contains a halogen element, it is also preferable to use a lithium halide (LiX, X is a halogen element) as the lithium element (Li)-containing raw material. The lithium halide is described below.

As a raw material containing phosphorus element (P), P-containing substances such as elemental P and a P-containing compound can be appropriately combined and used. The phosphorus element (P)-containing raw material may be used alone or in combination of two or more types thereof.

Examples of the phosphorus element (P)-containing raw material include phosphorus sulfides such as phosphorus pentasulfide (P₂S₅) and phosphorus trisulfide (P₂S₃), phosphorus compounds such as sodium phosphate (Na₃PO₄), and elemental phosphorus.

As a raw material containing an element (M) that is an element belonging to Groups 2 to 15 of the periodic table, and has an atomic number larger than that of P and is capable of forming a four-coordinate structure with S, a well-known raw material can be adopted.

For example, as an element (M)-containing raw material, an elemental substance composed of the element (M), an oxide of the element (M), a sulfide of the element (M), and a halide of the element (M) can be appropriately used in combination.

Specific examples of the elements are shown below.

When the element M includes a tin element (Sn), examples of a tin element (Sn)-containing raw material include Sn (elemental Sn), SnS, SnS₂, SnO, SnO₂, and SnCl₂. Among them, from the viewpoint of the lithium ion conductivity, SnS₂ and SnCl₂ are preferred, and SnS₂ is more preferred. The tin element (Sn)-containing raw material may be used alone or in combination of two or more types thereof.

When the element M includes an antimony element (Sb), examples of an antimony element (Sb)-containing raw material include Sb (elemental Sb), Sb₂S₃, and Sb₂S₅. The antimony element (Sb)-containing raw material may be used alone or in combination of two or more types thereof.

When the element M includes a germanium element (Ge), examples of a Ge element-containing raw material include GeO₂, GeS, GeS₂, and GeCl₂. Among them, GeS₂ and GeCl₂ are preferred, and GeS₂ is more preferred, from the viewpoint of the lithium ion conductivity. These compounds may be used alone or in combination of two or more types thereof.

When the element M includes an indium element (In), examples of an In element-containing raw material include In₂O₃, In₂S₃, and InCl₃. Among them, In₂S₃ and InCl₃ are preferred, and In₂S₃ is more preferred, from the viewpoint of the lithium ion conductivity. These compounds may be used alone or in combination of two or more types thereof.

When the element M includes a copper element (Cu), examples of a Cu element-containing raw material include Cu₂O, CuO, Cu₂S, CuS, and CuCl₂. Among them, CuS and CuCl₂ are preferred, and CuS is more preferred, from the viewpoint of the lithium ion conductivity. These compounds may be used alone or in combination of two or more types thereof.

When the crystal contained in the crystal phase of the sulfide solid electrolyte obtained by the production method according to the present embodiment contains the element M', a raw material containing the element M' capable of forming a four-coordinate structure with S is further used as the raw material in step S1.

In the case where the element M' contains a silicon element (Si), examples of a Si-containing raw material include Si (elemental Si), SiO₂, and SiS₂. Among them, SiO₂ is more preferred from the viewpoint of the lithium ion conductivity. The silicon element (Si)-containing raw material may be used alone or in combination of two or more types thereof.

In the case where the element M' contains an aluminum element (Al), examples of an Al-containing raw material include Al₂S₃, Al₂O₃, and AlCl₃. Among them, Al₂S₃ and AlCl₃ are preferred, and Al₂S₃ is more preferred, from the viewpoint of the lithium ion conductivity. These compounds may be used alone or in combination of two or more types thereof.

As the sulfur element (S)-containing raw materials, S-containing raw materials such as elemental S and S-containing compounds can be appropriately combined and used. The sulfur element (S)-containing raw material may be used alone or in combination of two or more types thereof. Li₂S is a compound serving as both the sulfur element (S)-containing raw material and the lithium element (Li)-containing raw material described above. P₂S₅ is a compound serving as both the sulfur element (S)-containing raw material and the phosphorus element (P)-containing raw material described above.

SnS is a compound serving as both the sulfur element (S)-containing raw material and the Sn-containing raw material described above. Sb₂S₃ is a compound serving as both the sulfur element (S)-containing raw material and the Sb-containing raw material described above.

Examples of the sulfur element (S)-containing raw material include phosphorus sulfides such as phosphorus pentasulfide (P₂S₅) and phosphorus trisulfide (P₂S₃), other sulfur compounds containing phosphorus, elemental sulfur, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS).

Examples of the halogen element-containing raw material include lithium halides (LiHa) such as lithium fluoride (LiF), lithium chloride (LiCl), lithium bromide (LiBr), and lithium iodide (LiI), phosphorus halides, phosphoryl halides, sulfur halides, sodium halides, and boron halides. Among them, lithium halide is preferred from the viewpoint of preventing the inclusion of elements other than the elements constituting the target sulfide solid electrolyte. These compounds may be used alone or in combination of two or more types thereof.

Further, halogens may be introduced as HX or X₂ gas, or may be introduced as Br₂ or I₂ when X is Br or I.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

### <Step S2: heating and melting>

Step S2 in the present embodiment is a step of performing a heat treatment to obtain a melt of the raw material mixture obtained in step S1.

The specific method of heating and melting the raw material mixture is not particularly limited, and the raw material mixture is charged into a heat-resistant container and heated in a heating furnace. The raw material mixture may be sealed in the heat-resistant container. Melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above material, or may be a container having a layer made of carbon, an oxide, a nitride, a carbide, or the like, such as a carbon-coated quartz tube.

As the furnace in the heating furnace for use in the heating and melting, a well-known furnace including a heating unit can be appropriately used, and a material and a size of the furnace can be freely selected.

The temperature in the heating and melting is not particularly limited as long as the raw material mixture is melted, and is preferably 600°C or higher, more preferably 600°C to 1,000°C, still more preferably 630°C to 950°C, yet still more preferably 650°C or higher and lower than 900°C, and particularly preferably 650°C or higher and lower than 850°C. Here, the temperature in the heating and melting is preferably 600°C or higher, more preferably 630°C or higher, and still more preferably 650°C or higher, from the viewpoint of homogenizing the melt in a short time. The temperature in the heating and melting is preferably 1,000°C or lower, more preferably 950°C or lower, still more preferably lower than 900°C, and particularly preferably lower than 850°C, from the viewpoint of preventing deterioration or decomposition of components in the melt.

The temperature in the heating and melting is the temperature of the melt generated in the furnace, and can be adjusted by the heating unit provided in the furnace.

The time for the heating and melting is not particularly limited as long as the raw material mixture is melted, and is, for example, preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or longer, more preferably 30 minutes or longer, still more preferably 45 minutes or longer, and particularly preferably 1 hour or longer, from the viewpoint of allowing the reaction to proceed smoothly. The time for the heating and melting is preferably 10 hours or shorter, more preferably 9.5 hours or shorter, and still more preferably 9 hours or shorter, from the viewpoint of preventing deterioration or decomposition of the component in the melt due to heating.

The atmosphere for the heating and melting is preferably an inert atmosphere. Examples of the inert atmosphere include a nitrogen gas atmosphere, an argon gas atmosphere, and a helium gas atmosphere. The heating and melting may be performed in an atmosphere of a gas containing a sulfur element.

The dew point during the heating and melting is preferably -20°C or lower from the viewpoint of preventing a side reaction of melt with water vapor, oxygen, and the like. The lower limit of the above dew point is not particularly limited, and is generally about -80°C. The oxygen concentration is preferably 1,000 ppm by volume or less.

The pressure during the heating and melting is not particularly limited as long as the raw material mixture is melted, and for example, ambient pressure or slight pressurization is preferred, and ambient pressure is more preferred.

The heating and melting is more preferably performed, for example, in a temperature range of 600°C to 1,000°C for 10 minutes to 10 hours, and in addition to the above, is further preferably performed under one or more conditions of an inert atmosphere, a condition of a dew point of -20°C or lower, and ambient pressure or slight pressurization, more preferably performed under two or more conditions thereof, and particularly preferably performed under all three conditions.

In step S2, it can be confirmed that the raw material mixture is completely melted by the absence of peaks derived from crystals in high-temperature X-ray diffraction measurement.

In step S2, in order to facilitate precipitation of the crystal in subsequent step S3, a compound serving as a crystal nucleus may be contained in the melt.

The method of incorporating the compound serving as a crystal nucleus into the melt is not particularly limited, and examples thereof include a method of adding the compound serving as a crystal nucleus to the raw materials, and a method of directly adding the above compound serving as a crystal nucleus to the melt during the heating and melting.

Examples of the compound serving as a crystal nucleus include oxides, oxynitrides, nitrides, carbides, other chalcogen compounds, and halides. The compound serving as a crystal nucleus is preferably a compound having a certain degree of compatibility with the melt. A compound completely incompatible with the melt cannot serve as a crystal nucleus.

### <Step S3: cooling>

Step S3 in the present embodiment is a step of cooling the melt obtained in the above step S2 to precipitate a crystal. Accordingly, a crystal represented by the compositional formula: RₐP_{b}M_{c}M'_{c'}S_{d}Xₑ is obtained.

The crystal obtained in step S3 may be used as the sulfide solid electrolyte, or a resultant obtained by subjecting the solid to the subsequent post-heat treatment in step S4 may be used as the sulfide solid electrolyte.

In step S3, the melt obtained in step S2 is discharged through, for example, a discharge port provided in the furnace at any timing, and the production method proceeds to a step of cooling and solidifying the melt. The cooling of the melt can be performed by a known method and is not particularly limited. For example, from the viewpoint of increasing a cooling rate, cooling using a twin roller, which is generally said to have the highest rapid cooling rate, is preferred.

The cooling rate is preferably 0.1°C/sec to 10,000°C/sec, more preferably 0.5°C/sec to 5,000°C/sec, and still more preferably 1°C/sec to 1,000°C/sec. Here, the cooling rate is preferably 0.1°C/sec or more, more preferably 0.5°C/sec or more, and still more preferably 1°C/sec or more, from the viewpoint of increasing composition homogeneity and preventing variation in quality. The upper limit value of the cooling rate is not particularly limited, and the upper limit value is 1,000,000°C/sec or less in consideration of the cooling rate of a twin roller, which is generally said to have the highest rapid cooling rate, and from the viewpoint of actual production, the cooling rate is more preferably 10,000°C/sec or less, still more preferably 5,000°C/sec or less, and yet still more preferably 1,000°C/sec or less.

On the other hand, a sulfide solid electrolyte having a crystal phase may be obtained by slow cooling during the cooling. The sulfide solid electrolyte may have a crystal phase and an amorphous phase.

The cooling rate in the case of slow cooling is preferably 0.01°C/sec to 2,000°C/sec, more preferably 0.01°C/sec to 1,000°C/sec, still more preferably 0.01°C/sec to 750°C/sec, yet still more preferably 0.01°C/sec to 500°C/sec, and particularly preferably 0.05°C/sec to 450°C/sec. The cooling rate may be 0.01°C/sec to 10°C/sec or 0.05°C/sec to 5°C/sec.

Here, the above cooling rate is preferably 0.01°C/sec or more, more preferably 0.05°C/sec or more, and is preferably 2,000°C/sec or less, more preferably 1,000°C/sec or less, still more preferably 750°C/sec or less, yet still more preferably 500°C/sec or less, and particularly preferably 450°C/sec or less. The cooling rate may be 10°C/sec or less or 5°C/sec or less. The cooling rate may be appropriately adjusted according to crystallization conditions.

The atmosphere during the cooling is preferably an inert atmosphere with a low moisture content, similar to that in the heating and melting in step S2.

The cooling and solidification is preferably performed under ambient pressure. Here, ambient pressure means that the pressure is not controlled during the cooling. Specifically, the pressure is about 0.8 atm to 1.2 atm.

### <Step S4: post-heat treatment>

Step S4 in the present embodiment is a step of performing a post-heat treatment by heating again after the crystal is precipitated in step S3, and is optional.

When the solid obtained in step S3 contains an amorphous phase, crystallization is promoted by the post-heat treatment in step S4. The lithium ion conductivity may be increased by rearranging ions in the crystal structure through the above post-heat treatment.

That is, the above post-heat treatment refers to at least one of a heat treatment for crystallizing the obtained solid and a heat treatment for rearranging the ions in the crystal structure.

The temperature in the post-heat treatment is, for example, preferably 300°C to 600°C, more preferably 350°C to 600°C, still more preferably 355°C to 550°C, and particularly preferably 360°C to 500°C. Here, the temperature of the post-heat treatment is preferably 300°C or higher, more preferably 350°C or higher, still more preferably 355°C or higher, and yet still more preferably 360°C or higher, from the viewpoint of shortening the heat treatment time. The temperature of the post-heat treatment is preferably 600°C or lower, more preferably 550°C or lower, and still more preferably 500°C or lower, from the viewpoint of preventing sintering of particles.

The time for the post-heat treatment is preferably 10 minutes to 20 hours, more preferably 10 minutes to 10 hours, still more preferably 30 minutes to 9.5 hours, yet still more preferably 45 minutes to 9 hours, and particularly preferably 1 hour to 9 hours. Here, the time for the heat treatment is preferably 10 minutes or longer, more preferably 30 minutes or longer, still more preferably 45 minutes or longer, and particularly preferably 1 hour or longer, from the viewpoint of facilitating the production stability. The time for the post-heat treatment is preferably 20 hours or shorter, more preferably 10 hours or shorter, still more preferably 9.5 hours or shorter, and yet still more preferably 9 hours or shorter, from the viewpoint of production costs.

The atmosphere in the post-heat treatment is preferably an inert atmosphere. Examples of the inert atmosphere include a nitrogen gas atmosphere, an argon gas atmosphere, and a helium gas atmosphere.

The dew point during the post-heat treatment is preferably -20°C or lower, and the lower limit thereof is not particularly limited and is generally about -80°C. The oxygen concentration is preferably 1,000 ppm by volume or less.

The post-heat treatment is more preferably performed, for example, in a temperature range of 300°C to 600°C for 10 minutes to 20 hours, and in addition to the above, is further preferably performed under at least one condition of an inert atmosphere and a condition of a dew point of -20°C or lower, and is particularly preferably performed under both conditions.

### <Effects>

The crystal represented by the compositional formula: RₐP_{b}M_{c}M'_{c'}S_{d}Xₑ can be obtained not only by the production method including steps S1 to S3 or steps S1 to S4 described above, but also by a solid phase reaction method. Here, the solid phase reaction method is a method in which a raw material mixture obtained by mixing raw materials is further subjected to mechanical mixing using media such as mechanical milling, and then subjected to a solid phase reaction by heating to obtain crystals.

However, particularly when attempting to obtain a crystal containing two or more types of elements M constituting an MS₄ tetrahedral structure or a crystal having an MS₄ tetrahedral structure and an M'S₄ tetrahedral structure, a very large amount of energy is required. Therefore, it is unrealistic from the viewpoint of mass production. In addition, it is difficult to achieve the ratio of the PS₄ tetrahedral structure, the MS₄ tetrahedral structure, and the M'S₄ tetrahedral structure as desired. Further, in the case of this production method, unreacted materials of the main raw material such as Li₂S tend to remain, which causes a decrease in ion conductivity and an increase in the amount of H₂S generated.

In contrast, by adopting the production method according to the present embodiment including steps S1 to S3 or steps S1 to S4 described above, a desired product can be produced with excellent productivity even if the crystal, in addition to the PS₄ tetrahedral structure, contains a crystal containing two or more types of the element M constituting the MS₄ tetrahedral structure, or further contains an element M' constituting the M'S₄ tetrahedral structure. Therefore, the production method according to the present embodiment is very suitable, particularly in the case where two or more types of the element M constituting the MS₄ tetrahedral structure are contained, or in the case where the M'S₄ tetrahedral structure is also included in addition to the MS₄ tetrahedral structure. In particular, the structure of the obtained crystal and the performance of the sulfide solid electrolyte can be controlled by adjusting the conditions in steps S3 and S4.

It is believed that this is because, by going through a step of heating and melting the raw material mixture followed by a cooling step, the constituent components become uniform in a molten state, and a crystal structure in which the constituent components are uniformly dispersed can be obtained by cooling the molten material. The production method according to the present embodiment is not construed as being limited to the above action mechanism.

In addition, regarding the uniformity of the constituent components, in particular, PS₄ tetrahedrons, MS₄ tetrahedrons, and M'S₄ tetrahedrons are likely to be non-uniform, and the uniformity of the tetrahedral structure can be determined from Rietveld structure analysis of an XRD pattern. In particular, in the case of having a crystal structure of an F-43m space group, the determination can also be readily made based on the presence or absence of a diffraction pattern of a (111) plane on a low angle side of a (200) plane. That is, when a diffraction pattern of the (111) plane is obtained, it can be said that PS₄ tetrahedrons, MS₄ tetrahedrons, and M'S₄ tetrahedrons are not uniformly dispersed.

### EXAMPLE

Hereinafter, the present invention is specifically described with reference to Examples, but the present invention is not limited thereto. Examples 1 to 11 and Examples 15 and 16 are Inventive Examples, and Examples 12 to 14 are Comparative Examples.

### <<Examples 1 to 14>>

Under a dry nitrogen gas atmosphere, raw materials containing the respective elements were weighed so as to have compositional ratios shown in Table 1, and mixed in a mortar to obtain a raw material mixture.

As raw materials containing the respective elements, lithium sulfide powder (manufactured by Sigma, purity: 99.98%) as a raw material containing Li and S, phosphorus pentasulfide powder (manufactured by Sigma, purity: 99%) as a raw material containing P and S, SnS₂ powder (manufactured by Mitsuwa Chemicals Co., Ltd., purity: 99.5%) as a raw material containing Sn, Sb₂S₃ powder (manufactured by Mitsuwa Chemicals Co., Ltd., purity: 99.98%) as a raw material containing Sb, SiS₂ powder (manufactured by Mitsuwa Chemicals Co., Ltd., purity: 99%) as a raw material containing Si, lithium bromide powder (manufactured by Sigma, purity: 99.995%) as a raw material containing Br and Li, lithium iodide powder (manufactured by Tokyo Chemical Industry Co., Ltd., purity: 99.9% low moisture grade) as a raw material containing I and Li, and lithium chloride powder (manufactured by Sigma, purity: 99%) as a raw material containing Cl and Li, were used. When the Sb₂S₃ powder was used as the raw material containing Sb, the composition was adjusted by further using a sulfur raw material (manufactured by Sigma, purity: 99.98%).

The raw material mixture obtained above was placed in a quartz tube and vacuum sealing was performed. Thereafter, the raw material mixture was heated in an electric furnace at 700°C to 800°C for 1 hour to obtain a completely molten material.

Next, the melt was cooled to room temperature at 1°C/sec to 5°C/sec to precipitate crystals, thereby obtaining a sulfide solid electrolyte.

Table 1 also shows the ratio represented by {(c + c')/(b + c + c')}, the ratio represented by {e/(b + c + c')}, and the proportion of isolated sulfur when expressed by the compositional formula: RₐP_{b}M_{c}M'_{c'}S_{d}Xₑ as "composition parameters".

Here, the proportion of isolated sulfur means a value represented by {d - (b + c + c') × 4} when the sum of moles of elements P, M, and M' that can be bonded to sulfur to form a tetrahedron is normalized as 1.

### <<Examples 15 and 16>>

The crystal obtained in Example 7 was further subjected to a post-heat treatment at 400°C for 1 hour (Example 15) or at 450°C for 1 hour (Example 16) in a dry nitrogen gas atmosphere, followed by cooling again to room temperature at 1°C/sec, thereby obtaining a sulfide solid electrolyte.

### <<Evaluation>>

### <X-Ray Diffraction Measurement (XRD)>

For the sulfide solid electrolytes of Examples 1 to 16, the sulfide solid electrolyte was pulverized in a mortar and passed through a 100 µm sieve, thereby obtaining a powder having a D50 of about 10 µm to 20 µm. Here, D50 means a volume-based median diameter.

The powder obtained above was subjected to an XRD measurement using an X-ray diffractometer (SmartLab, manufactured by Rigaku Corporation) under the following conditions in an air non-exposure environment.

Radiation Source: CuKα ray (λ = 1.5418 Å), tube voltage: 45 kV, tube current: 200 mA, scanning angle: 10° to 100°, scanning speed: 5°/min, step width: 0.01°/step.

The measurement was performed after mixing silicon as an internal standard in an amount of 10 mass%.

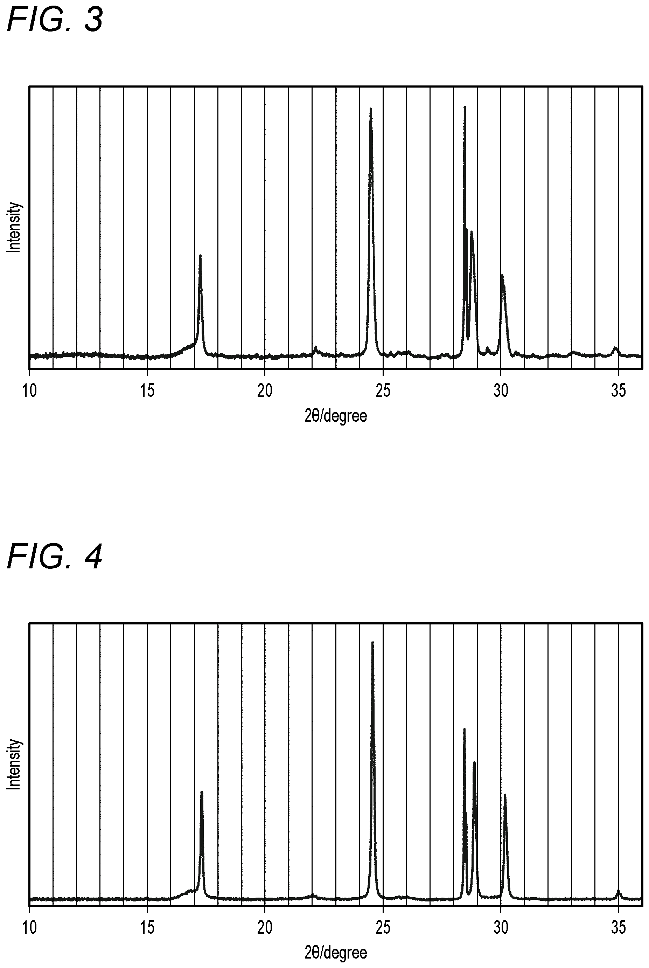

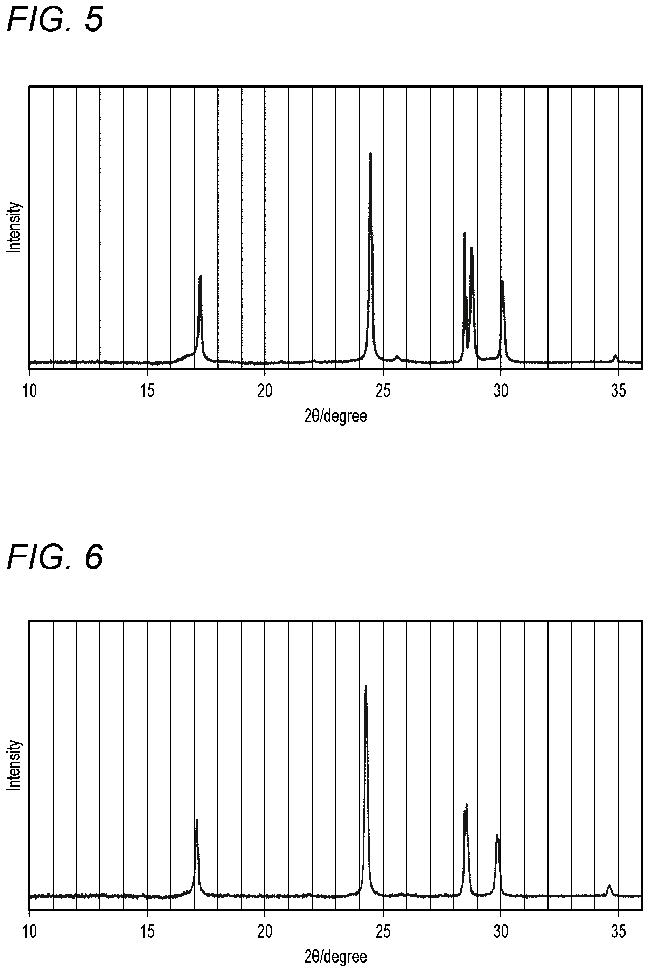

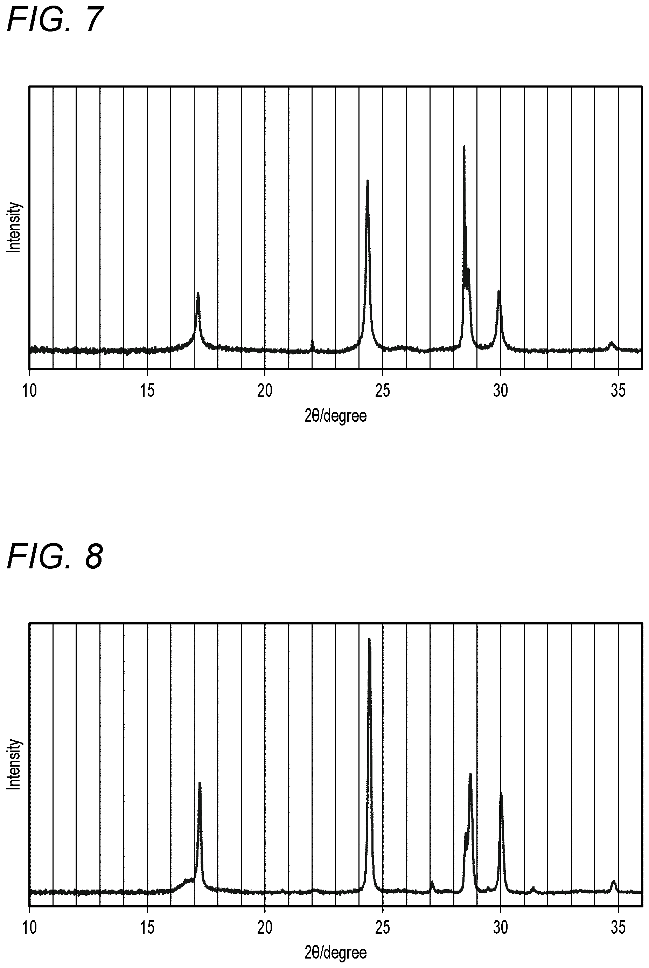

As an example, the XRD patterns of the sulfide solid electrolytes of Examples 1, 3, 5, 7, 9, and 11 are shown in FIGS. 3 to 8, and from the XRD patterns, it was confirmed that crystals having the same composition as the composition shown in Table 1 were obtained in all of Examples 1 to 14. In addition, it was confirmed that crystals in Examples 15 and 16 had the same composition as that of Example 7, and it was suggested that, although the composition remained unchanged, their crystal structure had changed from that of Example 7 due to the post-heat treatment. The peak at 2θ = 28.5° in FIGS. 3 to 8 is the internal standard of Si. The broad peak observed at 2θ = 16° to 17° is a peak derived from a window material for an XRD non-atmospheric exposure holder. Each of the crystals obtained above was a cubic argyrodite-type having a crystal structure of F-43m space group.

Further, it was confirmed by Rietveld analysis of XRD patterns that the crystal had a PS₄ tetrahedral structure, a SnS₄ tetrahedral structure, and a SbS₄ tetrahedral structure in Examples 1 to 3, the crystal had a PS₄ tetrahedral structure, a SiS₄ tetrahedral structure, a SnS₄ tetrahedral structure, and a SbS₄ tetrahedral structure in Examples 4 and 9, the crystal had a PS₄ tetrahedral structure, a SiS₄ tetrahedral structure, and a SbS₄ tetrahedral structure in Examples 5 to 8, 10, 11, 15, and 16, the crystal had a PS₄ tetrahedral structure in Examples 12 and 13, and the crystal had a SiS₄ tetrahedral structure and a SbS₄ tetrahedral structure in Example 14. In the XRD pattern, since there was no diffraction pattern (diffraction peak) of the (111) plane on the low-angle side of the (200) plane, it was found that these tetrahedral structures were uniformly arranged.

### <Lithium Ion Conductivity>

The sulfide solid electrolytes of Examples 1 to 16 were pulverized in a mortar and passed through a 100 µm sieve, thereby obtaining a powder having a D50 of 10 µm to 20 µm. Here, D50 means a volume-based median diameter.

The powder obtained above was used as a sample, and the lithium ion conductivity of the sample was measured by electrochemical impedance spectroscopy (potentiostat/galvanostat VSP, manufactured by Bio-Logic Sciences Instruments).

Measurement conditions were a measurement frequency of 100 Hz to 1 MHz, a measurement voltage of 100 mV, and a measurement temperature of 25°C.

### <Water Resistance: amount of H₂S generated>

The sulfide solid electrolytes of Examples 1 to 14 were pulverized in a mortar and passed through a 100 µm sieve, thereby obtaining a powder having a D50 of 10 µm to 20 µm.

A 20 mg portion of the powder obtained above was weighed and used as a sample, and nitrogen gas having a dew point of -20°C was flowed at a flow rate of 0.5 L/min for 5 hours. The amount of H₂S generated at that time was measured and normalized by dividing by the weight (20 mg) of the sample. The results are shown in "Amount of H₂S generated (mL/g)" in Table 1.

### <Water Resistance: Retention Rate of Lithium Ion Conductivity>

The sulfide solid electrolytes of Examples 1 to 14 were pulverized in a mortar and passed through a 100 µm sieve, thereby obtaining a powder having a D50 of 10 µm to 20 µm.

A 150 mg portion of the powder obtained above was weighed and used as a sample, and nitrogen gas having a dew point of -20°C was flowed at a flow rate of 0.5 L/min for 1 hour. Thereafter, vacuum heating was performed at 80°C for 1 hour, and the lithium ion conductivity was measured under the same conditions as described in the above <Lithium Ion Conductivity>. The results are shown in "Conductivity (after exposure) [mS/cm]" in Table 1.

The retention rate of the lithium ion conductivity was calculated from the value of the lithium ion conductivity obtained in the present test, with the value obtained in the above <Lithium ion conductivity> taken as 100% (reference). The results are shown in "Conductivity (retention rate) [%]" in Table 1.

### <Reduction Resistance>

The sulfide solid electrolytes of Examples 1 to 14 were pulverized in a mortar and passed through a 100 µm sieve, thereby obtaining a powder having a D50 of 10 µm to 20 µm.

A 100 mg portion of the powder obtained above was pressure-molded at 380 MPa to prepare a compacted powder pellet having a diameter of 10 mm. This was used as a separator layer and placed between lithium metal as a working electrode and SUS (stainless steel) metal as a counter electrode, and cyclic voltammetry was performed.

Conditions were as follows.
Sweep range: 2.0 V → 0.1 V vs. Li/Li⁺, sweep rate: 1 mV/sec

From the obtained cyclic voltammogram, the reduction resistance was evaluated using the current value at a voltage of 0.1 V as an index. The evaluation criteria were as follows.
A: -0.01 mA or more
B: -0.02 mA or more and -0.01 mA or less
C: less than -0.02 mA

Results are shown in "reduction resistance" in Table 1.

**[Table 1]**

| | Composition (mol) | Composition parameter | | |
|---|---|---|---|---|
| | | {c/(b + c)} | {e/(b + c) | Proportion of isolated sulfur |
| Example 1 | Li_{5.9}[P_{0.6}Sn_{0.2}Sb_{0.2}]S_{4.7}I_{1.3} | 0.40 | 1.30 | 0.70 |
| Example 2 | Li_{5.6}[P_{0.6}Sn_{0.2}Sb_{0.2}]S_{4.4}I_{1.6} | 0.40 | 1.60 | 0.40 |
| Example 3 | Li_{5.6}[P_{0.6}Sn_{0.2}Sb_{0.2}]S_{4.4}Br_{0.8}I_{0.8} | 0.40 | 1.60 | 0.40 |
| Example 4 | Li_{6.4}[P_{0.25}Si_{0.25}Sb_{0.25}Sn_{0.25}]S_{4.9}I_{1.1} | 0.75 | 1.10 | 0.90 |
| Example 5 | Li_{6.3}[P_{0.25}Si_{0.5}Sb_{0.25}]S_{4.8}I_{1.2} | 0.75 | 1.20 | 0.80 |
| Example 6 | Li_{5.98}[P_{0.25}Si_{0.375}Sb_{0.375}]S_{4.6}I_{1.4} | 0.75 | 1.40 | 0.60 |
| Example 7 | Li_{5.78}[P_{0.25}Si_{0.375}Sb_{0.375}]S_{4.4}I_{1.6} | 0.75 | 1.60 | 0.40 |
| Example 8 | Li_{5.98}[P_{0.25}Si_{0.375}Sb_{0.375}]S_{4.6}Br_{0.7}I_{0.7} | 0.75 | 1.40 | 0.60 |
| Example 9 | Li_{6.1}[P_{0.25}Si_{0.3}Sn_{0.2}Sb_{0.25}]S_{4.6}I_{1.4} | 0.75 | 1.40 | 0.60 |
| Example 10 | Li_{6.28}[P_{0.1}Si_{0.38}Sb_{0.52}]S_{4.9}I_{1.1} | 0.90 | 1.10 | 0.90 |
| Example 11 | Li_{5.98}[P_{0.1}Si_{0.38}Sb_{0.52}]S_{4.6}I_{1.4} | 0.90 | 1.40 | 0.60 |
| Example 12 | Li₆PS₅Cl | 0.00 | 1.00 | 1.00 |
| Example 13 | Li_{5.4}PS_{4.4}Cl_{1.6} | 0.00 | 1.60 | 0.40 |
| Example 14 | Li_{6.6}[Si_{0.6}Sb_{0.4}]S₅I | 1.00 | 1.00 | 1.00 |

**(Table 1 continued)**

| | Water resistance test | | | Reduction resistance |
|---|---|---|---|---|
| | Amount of H₂S generated [mL/g] | Conductivity (after exposure) [mS/cm] | Conductivity (retention rate) [%] | |
| Example 1 | 11 | 0.7 | > 90% | A |
| Example 2 | 8 | 1.4 | > 90% | A |
| Example 3 | 5 | 1.2 | > 90% | A |
| Example 4 | 7 | 0.8 | > 90% | A |
| Example 5 | 15 | 1.0 | > 90% | A |
| Example 6 | 13 | 1.5 | > 90% | A |
| Example 7 | 4 | 2.6 | > 90% | A |
| Example 8 | 11 | 2.2 | > 90% | A |
| Example 9 | 7 | 2.1 | > 90% | A |
| Example 10 | 11 | 1.8 | > 90% | B |
| Example 11 | 5 | 2.7 | > 90% | A |
| Example 12 | 55 | 0.1 | 5% | A |
| Example 13 | 23 | 0.5 | 10% | A |
| Example 14 | 25 | 0.5 | 35% | C |

From the above results, it was found that, in the sulfide solid electrolyte according to the present embodiment, the amount of H₂S generated was small, a decrease in ion conductivity when exposed to an atmosphere containing moisture was prevented, and good reduction resistance was obtained.

In particular, from the results of Examples 1 to 11, when the PS₄ tetrahedral structure and the MS₄ tetrahedral structure coexist, the amount of H₂S generated could be reduced, and a decrease in the ion conductivity when exposed to an atmosphere containing moisture could also be prevented. Further, it was found that when similar compositions are compared, the amount of H₂S generated can be further reduced by increasing the compositional ratio e of the halogen element (X). It is considered that this is because the proportion of isolated sulfur can be reduced.

On the other hand, in Examples 12 and 13, the crystal did not have an MS₄ tetrahedral structure but had only a PS₄ tetrahedral structure. Although the reduction resistance was excellent due to the presence of the PS₄ tetrahedral structure, the water resistance was very low.

In Example 14, the crystal had an MS₄ tetrahedral structure but did not have a PS₄ tetrahedral structure. As a result, the retention rate of the lithium ion conductivity was higher than those of Examples 12 and 13, but still did not reach the results of Examples 1 to 11. In addition, the reduction resistance was inferior when a PS₄ tetrahedral structure was not present.

Further, the lithium ion conductivity at 25°C in Example 7 was 2.6 mS/cm, whereas the lithium ion conductivities in Examples 15 and 16 were 7.2 mS/cm and 8.3 mS/cm, respectively. From this, it was found that the lithium ion conductivity was increased by further performing a post-heat treatment by heating after the crystals were precipitated.

Although the present invention has been described in detail with reference to specific embodiments, it is apparent to those skilled in the art that various changes and modifications can be made without departing from the spirit and scope of the present invention. The present application is based on a Japanese Patent Application No. 2023-206288 filed on December 6, 2023, the content of which is incorporated herein by reference.

## Claims

1. A sulfide solid electrolyte comprising a crystal phase,
wherein the crystal phase comprises a crystal represented by a compositional formula: RₐP_{b}M_{c}M'_{c'}S_{d}Xₑ,
in the compositional formula, R represents an alkali metal element, P represents a phosphorus element, M is an element belonging to Groups 2 to 15 of the periodic table and represents an element having an atomic number larger than that of P and capable of forming a four-coordinate structure with S, M' is an element belonging to Groups 2 to 15 of the periodic table and represents an element having an atomic number smaller than that of P and capable of forming a four-coordinate structure with S, S represents a sulfur element, and X represents a halogen element,
in the compositional formula, 3 < a < 7, 0 < b, 0 < c, 0 ≤ c', b + c + c' = 1, 3 < d < 6, 0.1 < {(c + c')/(b + c + c')} < 1.0, and 1.1 ≤ {e/(b + c + c')} ≤ 2.0 are satisfied, and
the crystal comprises a PS₄ tetrahedral structure and an MS₄ tetrahedral structure.

2. The sulfide solid electrolyte according to claim 1,
wherein in the compositional formula, 4 < a < 7 is satisfied.

3. The sulfide solid electrolyte according to claim 1,
wherein in the compositional formula, 0.2 < {(c + c')/(b + c + c')} < 1.0 is satisfied.

4. The sulfide solid electrolyte according to claim 1,
wherein in the compositional formula, 4 < d < 6 is satisfied.

5. The sulfide solid electrolyte according to claim 1,
wherein in the compositional formula, 1.2 ≤ {e/(b + c + c')} ≤ 1.9 is satisfied.

6. The sulfide solid electrolyte according to claim 1,
comprising, as M in the compositional formula, at least one selected from the group consisting of Mn, Ni, As, Mo, Co, Ag, Cd, Ir, W, Sn, Sb, Ga, Ge, In, Pb, Bi, Cu, Ti, V, Cr, Fe, Zn, Y, Zr, Nb, Ta, W, and La.

7. The sulfide solid electrolyte according to claim 1,
comprising, as M in the compositional formula, at least one of Sn and Sb .

8. The sulfide solid electrolyte according to claim 1,
comprising, as M' in the compositional formula, at least one selected from the group consisting of Mg, N, Si, Al, and B.

9. The sulfide solid electrolyte according to claim 1,
wherein the crystal has a crystal structure of an F-43m space group.

10. The sulfide solid electrolyte according to claim 1,
comprising I as X in the compositional formula.

11. The sulfide solid electrolyte according to claim 10, further comprising Br as X in the compositional formula.

12. The sulfide solid electrolyte according to claim 1,
wherein M and M' in the compositional formula comprise a total of two or more elements.

13. The sulfide solid electrolyte according to claim 12,
wherein M and M' in the compositional formula comprise a total of eight or less elements.

14. The sulfide solid electrolyte according to claim 1,
comprising, as R in the compositional formula, at least one selected from the group consisting of Li, Na, and K.

15. The sulfide solid electrolyte according to claim 1, comprising Li as R in the compositional formula.

16. The sulfide solid electrolyte according to claim 1,
wherein the crystal comprises an argyrodite crystal structure.

17. A method for producing the sulfide solid electrolyte according to any one of claims 1 to 16, the method comprising, in order:
mixing raw materials containing elements R, P, M, S, and X to obtain a raw material mixture;
performing a heat treatment to obtain a melt of the raw material mixture; and
cooling the melt to precipitate a crystal,
wherein among the elements, R represents an alkali metal element, P represents a phosphorus element, M is an element belonging to Groups 2 to 15 of the periodic table and represents an element having an atomic number larger than that of P and capable of forming a four-coordinate structure with S, S represents a sulfur element, and X represents a halogen element.

18. The method for producing the sulfide solid electrolyte according to claim 17,
wherein the cooling is performed by slow cooling at a cooling rate of 0.01°C/sec to 2,000°C/sec.

19. The method for producing the sulfide solid electrolyte according to claim 17,
wherein the raw material mixture further comprises a raw material containing an element M', and
M' is an element belonging to Groups 2 to 15 of the periodic table and is an element having an atomic number smaller than the atomic number of P and capable of forming a four-coordinate structure with S.

20. The method for producing the sulfide solid electrolyte according to claim 17, further comprising performing a post-heat treatment by heating after the crystal is precipitated.

21. The method for producing a sulfide solid electrolyte according to claim 20,
wherein the post-heat treatment is performed under a condition of a temperature of 300°C to 600°C, a time of 0 minute to 20 hours, an inert atmosphere, and a dew point of -20°C or lower.
